# EUROPEAN PATENT SPECIFICATION

(11) **EP 0 381 633 B1**
(45) Date of publication and mention of the grant of the patent: **28.12.1994**
(21) Application number: 90830035.3
(22) Date of filing: 29.01.1990
(51) Int. Cl.: G01B 11/00, G01B 11/24

(54) **System to automatically compensate the transversal oscillation of the scanning plane in a laser scanner for profile measurement by means of a special device**
System für das automatische Kompensieren der Transversaloscillation der Scan-Ebene in einem Laserscanner für Profilmessung mittels einer Spezialeinrichtung
Système pour compenser automatiquement l'oscillation transversale du plan de balayage dans un balayeur à laser pour mesure de profils au moyen d'un dispositif spécial

(30) Priority: 30.01.1989 IT 8280189
(43) Date of publication of application: 08.08.1990
(73) Proprietor: AEROEL S.r.l., I-33040 Pradamano (UD) (IT)
(72) Inventor: Spizzamiglio, Antonio, I-33100 Udine (UD) (IT)

(56) References cited:
- EP-A- 0 054 170
- US-A- 4 652 749
- US-A- 4 758 093
- PATENT ABSTRACTS OF JAPAN, vol. 10, no. 102 (P-448), 18th April 1986; & JP-A-60 235 114
- IBM TECHNICAL DISCLOSURE BULLETIN, vol. 27, no. 4A, September 1984, pages 2122-2123, New York, US; I. KIKUCHI et al: "Detection of skew and shift of CCD sensor array"
- WPIL, FILE SUPPLIER, AN-89-376959, Derwent Publications Ltd, London, GB; & SU-A-1465 704
- PATENT ABSTRACTS OF JAPAN, vol. 7, no. 202 (P-221), 7th September 1983; & JP-A-58 100 118
- PATENT ABSTRACTS OF JAPAN, vol. 9, no. 62 (P-342)[1785], 19th March 1985; & JP-A-59 197 813
- PATENT ABSTRACTS OF JAPAN, vol. 10, no. 232 (P-486)[2288], 12th August 1986; & JP-A-61 66 107

## Description

The invention concerns a system which allows to automatically compensate the transversal oscillation of the scanning plane in a laser scanner for profile measurement by means of a method allowing to reduce the time needed to take the profile of any piece or of a detail.

JP-A-60 235 114 describes the correction of pitch irregularity due to surface inclination of a polygon mirror using a half-mirror and an associated position detector with an associated control circuit.

As it is known, to take the profile of an object it is necessary to gauge the vertical coordinates (height, diameter, etc.) of the profile points corresponding to a number of horizontal coordinates, gauged starting from a certain original point appropriately chosen.

In the laser scanner mentioned in the patent application filed in Italy under No.82809 A/83 submitted by the applicant of the hereby patent, the measurement of vertical coordinates is carried out by means of a vertical scan laser gauge (object of the patent application filed in Italy under No.82817 A/82 also submitted by the applicant). The measurement of the horizontal coordinate is made be means of a linear encoder mounted on a piece-holding slide, which moves the piece in a direction perpendicular to the scanning plane of the laser beam. The values of vertical and horizontal coordinates, read by the scanner and by the linear encoder respectively, are entered and appropriately processed as input data in a separate computer and they supply different profile characteristics.

A speed, an accuracy and a flexibility in the profile gauging unimaginable by conventional techniques are achieved by means of this instrument; yet, the scanner has some limits which derive from imperfections of some opto-mechanical components of the laser gauge. It is referred particularly, to the rotating polygonal mirror, the facets of which have a certain error in the parallelism in comparison with the axis of rotation of the mirror itself and to the inevitable mechanical backlash of ball bearings supporting the axis of rotation of the mirror.

Taking into consideration that the mirror is, usually, integral with a flywheel (this because the measurement accuracy of the profile vertical coordinate depends on the constancy of rotation speed), it appears that the mechanical backlash of ball bearings causes a precession motion of the mirror-flywheel assembly, around the geometrical axis of the ball bearings.

The above reasons (non-parallelism of facets and precession motion) cause deviations of the scanning plane in correspondence to any scan of the laser beam; these deviations are in the region of a hundredth of a millimetre and imply an equal error in the measurement of horizontal coordinates.

It is not easy to limit such error by affecting directly the causes which determine it and it implies remarkable costs or restrictions in the instrument potentials.

In fact, in order to compensate the imperfect parallelism of the polygonal mirror facets, only one facet is made reflecting, or a single-faced mirror is used; however this causes a reduction in the scanning frequence and, therefore, a lengthening of gauging times.

Another solution which was also envisaged in the patent application filed in Italy under No.82809 A/83 is the adoption of a mirror having faces separately adjustable, however this implies a very high manufacturing cost without eliminating the motor shaft backlash effect.

The purpose of the present invention is to determine which is the real position of the scanning plane, by making the needed correction in the horizontal coordinate gauged by the linear encoder.

This purpose is achieved by the hereby invention, which solves the previously-mentioned problems by using a reference element consisting in: a triangular plate integral with the laser gauge and positioned preferably in such a way that a side is perpendicular to the scanning plane and another side is inclined in comparison with the same by a known angle;
or by a mask, preferably triangular, photengraved onto a plane-parallel glass plate being the last element of the optical chain or onto the scan lens;
or by a pin having the shape of a truncated cone, integral with the laser gauge and positioned preferably so as to have its axis perpendicular to the scanning plane and having a known angle at the vertex or a known conicity.

This reference element allows to correlate the lenght of the vertical segment originated by the intersection between the scanning plane and the reference element cross-section, with the scanning plane horizontal deviation.

The advantages achieved by means of the hereby invention lie in that, by means of anyone of the above-mentioned reference element it is possible to solve the previously-mentioned problems in a way which is cheaper than the partial or total reduction of reasons causing the deviation of the scanning plane, without affecting the accuracy of final result;
furthermore, a reduction of the gauging times are achieved.

The invention will be better understood by reading the explanation of an execution example, illustrated in the attached sketches, which describes the working principle of the invention and how it is possible, by means of the same, to correct the horizontal coordinate supplied by the linear encoder, thanks to the use of a reference element consisting in a plate (for example triangular).

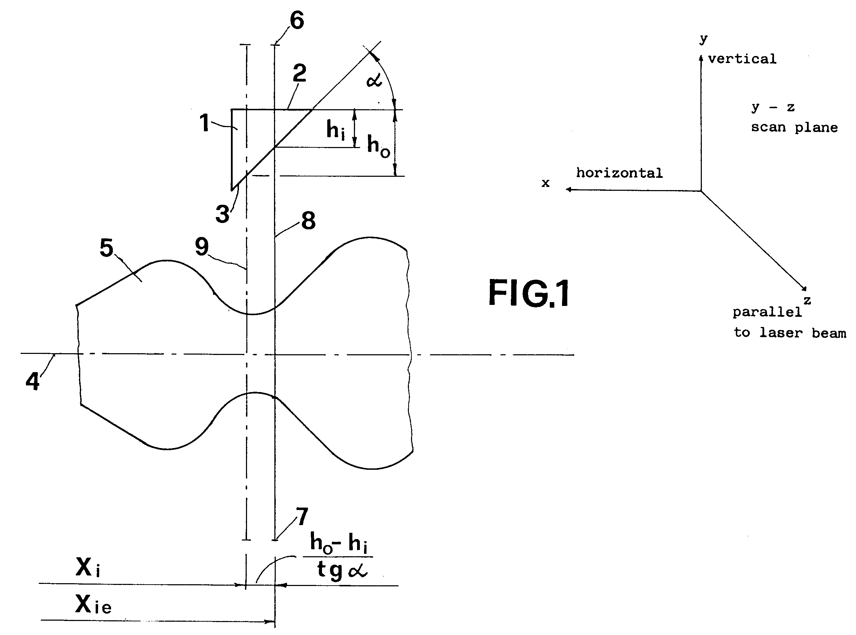

Figure 1 shows how the above-mentioned reference element is positioned in comparison with the vertical scanning plane and with the horizontal movement axis of the piece.

More precisely the main component is the triangular plate 1 integral with the laser gauge and positioned in such a way that it is contained in a vertical plane perpendicular to the scanning plane and has side 2 perpendicular to the same scanning plane; consequently side 3 of the triangular plate 1 becomes inclined of angle α in comparison with the horizontal axis 4 of piece 5.

The triangular plate 1 is also contained within the measuring range of the laser gauge, that means that its vertical dimensions are within the upper limit 6 and the lower limit 7 of track 8 of the scanning plane swept by the laser beam.

For the rest the scanner is not different from what described in the patent application filed in Italy under No. 82809 A/83, except for the fact that the laser gauge is provided with a rotating polygonal mirror, all the facets of which are reflecting.

The mirror facets pyramidal error (parallelism error with respect to motor axis) and the motor axis backlash imply a deviation of the scanning plane which is compensated by the hereby described method.

That being said, the measure of the transversal deviation of the scanning plane is gauged by the hereby-described reference element according to the following principles.

In the first laser scanning the scanning plane takes a certain position in comparison with the triangular plate 1, which in figure 1 is shown by track 9 of the same scanning plane. During this first scanning, corresponding to a horizontal coordinate xₒ to be considered as the first reference, the plate height hₒ and, of course, the profile vertical coordinate are gauged.

During a general scanning, the piece will be moved by a certain horizontal coordinate xᵢ (measured starting from the first one xₒ) which is gauged by the linear encoder, whereas the scanning plane will have a track not necessarily corresponding with track 9 of the first scanning plane; the scanning plane having track 8 shown in figure 1 can serve as an example. The plate height hᵢ and the profile vertical coordinate are measured in this scanning too. However the actual horizontal coordinate cannot have the same value as coordinate xᵢ measured by the linear encoder. This value must be corrected by a factor of: 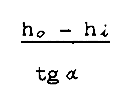
for this reference element.

In particular if it is chosen α = 45° the correction to make is simply hₒ - hᵢ.

Thanks to this reference elements it is possible to get the correct values of horizontal coordinates: 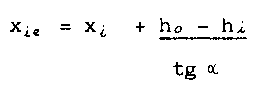
or xᵢₑ = xᵢ + (hₒ - hᵢ ) in the particular case that α = 45°.

## Claims

1. A method of automatically compensating transversal oscillations of the scanning plane in a laser scanner for profile measurement by means of a reference element, which oscillations cause error in measurements of the actual horizontal work piece position; said method comprising the steps of :
a) placing the reference element having a known geometrical shape, fixed to the laser scanner body, across said laser scanning plane;
b) measuring said reference element and said work piece, the profile of which is to be measured, in a first single scan of said laser scanner. The intersection of this scan plane with the workpiece axis determinates the origin of the horizontal coordinates;
c) second measuring of said reference element and said workpiece in a second single scan of said laser scanner;
d) determining the horizontal coordinate measuring error by multiplying the difference between said first and second reference element measurements by a known function which describes the scanning plane horizontal displacement vs. the lenght of the reference element vertical segment cut by the scanning plane itself;
e) adding said scanning plane position error to the longitudinal coordinate read by a linear encoder;
f) proceeding in the same way for each following scan in order to obtain the whole object corrected profile measurement despite the error of said scanning plane position;
wherein the reference element has a geometrically known shape and consists of:
- a triangular plate (1) integral with the laser scanner;
- or a triangular mask integral with the laser scanner;
- or a pin in the shape of a truncated cone integral with the laser scanner.

2. A method, according to claim 1, wherein one side of a triangular main cross section of said reference element perpendicular to the laser beam is preferably perpendicular also to the scanning plane of the profilometer and a second side is tilted, with respect to the scanning plane, by a known angle or, if one or both sides of this main cross section are not straight, they have a known shape.

3. A method, according to one of the previous claims, wherein the horizontal coordinates reading errors induced by scanning plane oscillations parallel to the plane, mainly produced by the scanner motor shaft backlash and by the parallelism error between the polygonal mirror different facets and the rotational axis, are automatically corrected by measuring the dimension in the scanning direction of said reference element.

## Patentansprüche

1. Ein Verfahren zum automatischen Ausgleich von Querschwingungen der Abtastebene eines Laserscanners zur Profilmessung mit Hilfe eines Bezugselements; Schwingungen, die fehlerhafte Messungen der tatsächlichen horizontalen Lage des Werkstücks verursachen; wobei besagtes Verfahren folgende Schritte umfaßt:
a) Anbringen des - am Laserscanner-Gehäuse befestigten - Bezugselements mit einer bekannten geometrischen Form gegenüber besagter Laser-Abtastebene;
b) Messung des besagten Bezugselements und des besagten Werkstücks, dessen Profil zu messen ist, mit einer ersten einfachen Abtastung des besagten Laserscanners. Der Schnittpunkt dieser Abtastebene mit der Werkstückachse bestimmt den Ausgangspunkt der horizontalen Koordinaten;
c) zweite Messung des besagten Bezugselements und des besagten Werkstücks mit einer zweiten einfachen Abtastung des besagten Laserscanners;
d) Bestimmung des Meßfehlers der horizontalen Koordinate durch Multiplikation der Abweichung zwischen erster und zweiter Messung des Bezugselements mit einer bekannten Funktion, die die Querverschiebung der Abtastebene gegenüber der Lange des Vertikalsegments des Bezugselements beschreibt, das von der Abtastebene selbst geschnitten wird;
e) Addition besagter Abweichung der Abtastebene zu der von einem linearen Meßwertgeber gelesenen Längskoordinate;
f) Gleiche Vorgehensweise für jede weitere Abtastung, um trotz besagter Positionsabweichung der Abtastebene die korrigierte Profilmessung des ganzen Werkstücks zu erhalten;
wobei das Bezugselement eine geometrisch bekannte Form hat und aus folgender Vorrichtung besteht:
- eine fest in den Laserscanner integrierte dreieckige Platte (1);
- oder eine fest in den Laserscanner integrierte dreieckige Schablone;
- oder ein fest in den Laserscanner integrierter Bolzen in Form eines stumpfen Kegels.

2. Ein Verfahren gemäß Anspruch 1, wobei eine Seite eines senkrecht zum Laserstrahl verlaufenden, dreieckigen Hauptquerschnitts (des besagten Bezugselementes) nach Möglichkeit auch senkrecht zur Abtastebene des Profilmessers verläuft und die zweite Seite in einem bekannten Winkel zur Abtastebene geneigt ist, oder wenn eine oder beide Seiten dieses Hauptquerschnitts nicht gerade sind, diese eine bekannte Form haben.

3. Ein Verfahren gemäß einem der vorgenannten Ansprüche, wobei die Lesefehler der horizontalen Koordinaten, die vor allem auf die durch das Spiel der Scanner-Antriebswelle und die mangelnde Parallelität zwischen den vieleckigen Spiegelseiten und der Drehachse parallel zur Ebene verursachten Schwingungen der Abtastebene zurückzuführen sind, durch Messung des besagten Bezugselements in Abtastrichtung automatisch korrigiert werden.

## Revendications

1. Une méthode pour compenser automatiquement les oscillations transversales du plan de balayage d'un scanneur à laser pour la mesure du profil au moyen d'un élément de référence, oscillations qui sont à l'origine des erreurs dans la mesure de la position horizontale réelle de la pièce en cours de travail; la susdite méthode prévoyant de:
a) placer l'élément de référence ayant une forme géométrique connue, solidaire du corps du scanneur à laser, dans le susdit plan de balayage du laser;
b) mesurer le susdit élément de référence et la pièce dont le profil est à mesurer, par un premier balayage du susdit scanneur à laser. L'intersection entre ce plan de balayage et l'axe de la pièce détermine le point origine des coordonnées horizontales;
c) mesurer une deuxième fois l'élément de référence et la susdite pièce par un deuxième balayage du susdit scanneur à laser;
d) calculer l'erreur de mesure de la coordonée horizontale en multipliant la différence entre la première et la deuxième mesure de l'élément de référence par une fonction connue décrivant le déplacement horizontal du plan de balayage par rapport à la longueur du segment vertical de l'élément de référence qui s'écarte du plan de balayage lui-même;
e) ajouter cette erreur de position du plan de balayage aux coordonnées longitudinales relevées par un transducteur linéaire;
f) procéder de la même manière pour chaque balayage successif de façon à obtenir la mesure corrigée du profil de l'objet tout entier malgré l'erreur dans la position du susdit plan de balayage;
cette méthode est caractérisée par la présence d'un élément de référence ayant une forme géométrique connue consistant en:
- une plaque triangulaire (1) solidaire du scanneur à laser;
- or une masque triangulaire solidaire du scanneur à laser;
- or une goupille tronconique solidaire du scanneur à laser.

2. Une méthode, selon la revendication 1, dans laquelle une côté de la coupe transversale principale triangulaire du susdit élément de référence perpendiculaire au rayon laser est de préférence perpendiculaire aussi au plan de balayage du profilomètre, et une deuxième côté est inclinée, par rapport au plan de balayage, d'un angle connu ou bien, si une ou les deux côtés de la coupe transversale principale ne sont pas rectilignes, elles ont une forme connue.

3. Une méthode, selon une des revendications précédentes, dans laquelle les erreurs de lecture des coordonnées horizontales déterminées par les oscillations du plan de balayage parallèles au plan, dues principalement au jeu de l'arbre du moteur du scanneur et à l'erreur de parallélisme entre les différentes facettes du miroir polygonal et l'axe de rotation, sont automatiquement corrigées en mésurant la dimension du susdit élément de référence dans la direction de balayage.
